(19) Europäisches Patentamt / European Patent Office / Office européen des brevets

(11) **EP 2 893 510 B1**

(12) **EUROPÄISCHE PATENTSCHRIFT**

(45) Veröffentlichungstag und Bekanntmachung des Hinweises auf die Patenterteilung:
**24.02.2016  Patentblatt 2016/08**

(51) Int Cl.:
*G06T 5/00* *(2006.01)*     *G06K 9/62* *(2006.01)*
*G06K 9/74* *(2006.01)*

(21) Anmeldenummer: **12769042.8**

(22) Anmeldetag: **05.09.2012**

(86) Internationale Anmeldenummer:
**PCT/EP2012/067352**

(87) Internationale Veröffentlichungsnummer:
**WO 2014/037039 (13.03.2014 Gazette 2014/11)**

(54) **VERFAHREN UND BILDVERARBEITUNGSANLAGE ZUM ENTFERNEN EINES VISUELLEN OBJEKTES AUS EINEM BILD**

METHOD AND IMAGE PROCESSING APPARATUS FOR REMOVING A VISUAL OBJECT FROM AN IMAGE

PROCÉDÉ ET PROCESSEUR D'IMAGES POUR ELIMINER UN OBJET VISUEL D'UN IMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.07.2015  Patentblatt 2015/29**

(73) Patentinhaber: **Fayteq AG**
**99094 Erfurt (DE)**

(72) Erfinder:
• **HERLING, Jan**
**99096 Erfurt (DE)**
• **BROLL, Wolfgang**
**99084 Erfurt (DE)**

(74) Vertreter: **Engel, Christoph Klaus**
**Engel Patentanwaltskanzlei**
**Marktplatz 6**
**98527 Suhl/Thüringen (DE)**

(56) Entgegenhaltungen:
EP-A1- 2 317 470     US-A1- 2005 146 539
US-A1- 2006 285 762

• LEVIN ET AL: "Learning how to inpaint from global image statistics", PROCEEDINGS OF THE EIGHT IEEE INTERNATIONAL CONFERENCE ON COMPUTER VISION. (ICCV). NICE, FRANCE, OCT. 13 - 16, 2003; [INTERNATIONAL CONFERENCE ON COMPUTER VISION], LOS ALAMITOS, CA : IEEE COMP. SOC, US, 13. Oktober 2003 (2003-10-13), Seiten 305-312vol.1, XP031213064, ISBN: 978-0-7695-1950-0

**Beschreibung**

Die vorliegende Erfindung betrifft ein Verfahren zum Entfernen eines visuellen Objektes aus einem Bild, beispielsweise aus einem Bewegtbild, welches in Form eines Videodatenstromes empfangen wird. Die Erfindung betrifft weiterhin eine Bildverarbeitungsanlage zur Ausführung des erfindungsgemäßen Verfahrens.

Aus dem wissenschaftlichen Artikel von J. Herling und W. Broll: "Advanced self-contained object removal for realizing real-time diminished reality in unconstrained environments" in Mixed and Augmented Reality (ISMAR), 2010 9th IEEE International Symposium on, Seiten 207-212, Oktober 2010, ist ein Verfahren zum Entfernen eines visuellen Objektes aus einem Videodatenstrom bekannt, welches bevorzugt in Realzeit abläuft. Das Verfahren ermöglicht es einem Nutzer, ein visuelles Objekt zu markieren, woraufhin dieses aus dem Bild entfernt wird. Dabei wird der Bereich des entfernten Objektes durch Bildinhalt aufgefüllt, welcher dem hinter dem entfernten Objekt befindlichen Bildinhalt möglichst nahe kommen soll. Zum Ersetzen der Bildinhalte werden Bereiche des Bildes außerhalb des entfernten Bereiches ausgewählt, wobei beim Aneinanderfügen der zum Ersetzen verwendeten Bereiche ein hoher Aufwand zur visuellen Anpassung insbesondere an den Übergängen erforderlich ist. Als Kriterium zur Auswahl der zum Ersetzen zu verwendenden Bereiche dient ein Maß, welches die visuelle Ähnlichkeit zwischen dem auszuwählenden Bereich und dem zu ersetzenden Bereich beschreibt. Ein weiteres Kriterium bildet ein Maß des Abstandes zwischen den genannten Bereichen.

Aus dem Stand der Technik sind weitere Verfahren bekannt, welche dazu dienen, visuelle Objekte aus einem Bild zu entfernen und entsprechend zu ersetzen. Die zum Ersetzen verwendeten Bereiche werden anhand ihrer visuellen Ähnlichkeit zu den zu ersetzenden Bereichen ausgewählt, so wie es beispielsweise aus dem wissenschaftlichen Artikel von L. Demanet, B. Song und T. Chan.: "Image inpainting by correspondence maps: a deterministic approach" in Computer, 1100(03-40):21750, 2003 und dem wissenschaftlichen Artikel von A. Criminisi, P. Perez und K. Toyama: "Region filling and object removal by exemplar-based image inpainting" in Image Processing, IEEE Transactions on, 13(9):1200-1212, September 2004 bekannt ist.

Die US 2006/285762 A1 zeigt ein Verfahren zur Vervollständigung von Bildern, bei welchem synthetische Bildinhalte für einen unbekannten Bildbereich automatisch generiert werden. Die synthetischen Bildinhalte werden aus dem Inhalt eines bekannten Bildbereiches generiert, wofür ein oder mehrere Kurven genutzt werden.

Die EP 2 317 470 A1 lehrt ein Verfahren zum Auffüllen von Bildinhalten, bei welchem die Inhalte mehrerer ähnlicher Bildbereiche genutzt werden.

In dem wissenschaftlichen Artikel von Levin, A. et al.: "Learning How to Inpaint from Global Image Statistics" in Proceedings of the 8th IEEE International Conference on Computer Vision (ICCV), Nice, Frankreich, 13.-16. Oktober 2003, Seiten 305-312, Vol. 1, ISBN 987-0-7695-1950-0, wird ein Ansatz zum Auffüllen von Löchern in Bildern vorgestellt, gemäß welchem statistische Eigenschaften der übrigen Bildinhalte berücksichtigt werden.

Aus der US 2005/146539 A1 ist ein Verfahren zur Generierung von Texturen bekannt, bei welchem ein Bildbereich mit Inhalten aus einem anderen Bildbereich gefüllt wird.

Die Aufgabe der vorliegenden Erfindung besteht ausgehend vom Stand der Technik darin, die Auswahl von Bildelementen zum Ersetzen zu entfernender visueller Objekte zu verbessern und zu beschleunigen.

Die genannte Aufgabe wird gelöst durch ein Verfahren gemäß dem beigefügten Anspruch 1 und durch eine Bildverarbeitungsanlage gemäß dem beigefügten nebengeordneten Anspruch 14.

Das erfindungsgemäße Verfahren dient dem Entfernen eines visuellen Objektes aus einem Bild, wobei es sich um ein einzelnes Bild oder um eine Bildfolge, wie beispielsweise ein Bewegtbild handeln kann. Bei dem visuellen Objekt handelt es sich um die visuelle Repräsentation eines natürlichen oder synthetischen Objektes, welches in dem Bild bzw. in der Bewegtbildfolge gezeigt ist. Auch kann es sich bei dem visuellen Objekt um einen bestimmten Bildbereich, beispielsweise um schwarze Balken am Rand des Bildes handeln. Grundsätzlich kann das repräsentierte Objekt statisch sein oder sich über die Zeit hinweg verändern oder bewegen. Das Objekt kann beispielsweise durch einen Menschen, einen Gegenstand oder Ähnliches gebildet sein. Das Entfernen des visuellen Objektes kann in einem einfachen Fall mit dem Ziel erfolgen, dass das Objekt vollständig aus dem Bild bzw. aus der Bildfolge verschwindet. Das Entfernen des visuellen Objektes kann aber auch mit dem Ziel erfolgen, dass das visuelle Objekt an einer bestimmten örtlichen Position aus dem Bild bzw. aus der Bildfolge verschwindet, um es anschließend an einer anderen örtlichen Position im Bild bzw. in der Bildfolge wieder einzufügen, ggf. nachdem es skaliert, rotiert und/oder perspektivisch transformiert wurde. Dies führt zu einer örtlichen Verschiebung des visuellen Objektes im Bild bzw. in der Bildfolge. Auch können zwei oder mehr visuelle Objekte entfernt und an der örtlichen Position des jeweils anderen visuellen Objektes wieder eingefügt werden, was zu einem Vertauschen der visuellen Objekte führt. Folglich kann das erfindungsgemäße Entfernen eines oder mehrerer visueller Objekte mit dem Ziel erfolgen, das bzw. die Objekte nach einer möglichen Skalierung, Rotation und/oder perspektivischen Transformation wieder einzufügen, was letztlich zu einer Neuordnung des Bildes führt. Ein weiteres mögliches Ziel besteht darin, visuelle Objekte in Form von schwarzen Balken am Rand des Bildes bzw. der Bildfolge zu entfernen, d. h. mit anderem Bildinhalt zu füllen, um eine Formatkonvertierung, beispielsweise von 4:3 zu 16:9 vorzunehmen.

In einem Schritt des erfindungsgemäßen Verfahrens wird ein Bild bereitgestellt, welches Bildpunkte in mindestens zwei Dimensionen aufweist. Es kann sich also um ein konventionelles zweidimensionales Bild oder auch um eine dreidimensionale Bildpunktfolge o. ä. handeln. Die Bildpunkte sind bevorzugt matrixartig angeordnet, wobei auch andere Formen der Anordnung möglich sind. In einem weiteren Schritt des erfindungemäßen Verfahrens ist ein zu entfernendes visuelles Objekt im Bild auszuwählen. Dieses Auswählen kann beispielsweise interaktiv durch einen Nutzer erfolgen. Anschließend ist eine Maske für das ausgewählte visuelle Objekt zu bestimmen. Durch die Maske ist definiert, welche der Bildpunkte des Bildes zu entfernen und zu ersetzen sind und welche der Bildpunkte des Bildes dem nicht zu verändernden Hintergrund bzw. anderen nicht zu verändernden Bildbestandteilen angehören. Die Maske kann beispielsweise dadurch gegeben sein, dass jedem der Bildpunkte des Bildes ein weiterer Wert für dessen Transparenz zugeordnet wird. Das Bestimmen der Maske erfolgt bevorzugt automatisch, wobei die vom Nutzer vorgenommene Auswahl entsprechend angepasst wird. In einem weiteren Schritt des erfindungsgemäßen Verfahrens werden Bildpunkte außerhalb der Maske ausgewählt, welche zum Ersetzen von Bildpunkten innerhalb der Maske verwendet werden sollen. Grundsätzlich können die Bildpunkte außerhalb der Maske in dem bereitgestellten Bild oder in einem anderen Bild gegeben sein. Das Auswählen der Bildpunkte erfolgt anhand eines Ähnlichkeitsmaßes, welches allgemein die Ähnlichkeit zwischen dem auszuwählenden Bildpunkt und einem vorab zum Ersetzen des zu ersetzenden Bildpunkt ausgewählten Bildpunkt beschreibt. Erfindungsgemäß umfasst das Ähnlichkeitsmaß mehrere Komponenten. Eine erste Komponente ist durch ein Erscheinungsähnlichkeitsmaß gebildet, welches die visuelle Ähnlichkeit zwischen einem vorab ausgewählten Bildpunkt zum Ersetzen des zu ersetzenden Bildpunktes und dem auszuwählenden Bildpunkt repräsentiert. Das Erscheinungsähnlichkeitsmaß kann beispielsweise auf der Grundlage von Luminanz-, Farb- oder Texturwerten der Bildpunkte bestimmt werden. Bei dem vorab ausgewählten Bildpunkt zum Ersetzen des zu ersetzenden Bildpunktes kann es sich beispielsweise um einen initial ausgewählten Bildpunkt handeln oder um einen Bildpunkt, welcher in einem vorangegangenen Iterationsschritt bereits ausgewählt wurde. Auch kann es sich bei dem vorab ausgewählten Bildpunkt um einen Bildpunkt handeln, welcher in einem zeitlich vorangegangenen Bild zum Ersetzen des an der gleichen Position wie der zu ersetzende Bildpunkt befindlichen Bildpunktes verwendet wurde. Das Erscheinungsähnlichkeitsmaß kann neben der visuellen Ähnlichkeit bezogen auf den zu ersetzenden Bildpunkt auch weitere visuelle Ähnlichkeiten, beispielsweise die visuelle Ähnlichkeiten in Bezug auf einige dem zu ersetzenden Bildpunkt benachbarte Bildpunkte repräsentieren. Erfindungsgemäß umfasst das Ähnlichkeitsmaß weiterhin ein Geometrieähnlichkeitsmaß. Das Geometrieähnlichkeitsmaß repräsentiert die örtliche bzw. räumliche Nähe des auszuwählenden Bildpunktes zu demjenigen der Bildpunkte außerhalb der Maske, welcher vorab zum Ersetzen des dem zu ersetzenden Bildpunkt benachbarten Bildpunktes verwendet wurde. Somit wird auch bei dem Geometrieähnlichkeitsmaß auf einen vorab ausgewählten Bildpunkt Bezug genommen, welcher wiederum initial festgelegt sein kann oder in einem vorangegangenen Iterationsschritt ausgewählt wurde. Bei dem dem zu ersetzenden Bildpunkt benachbarten Bildpunkt kann es sich um einen Bildpunkt handeln, welcher dem zu ersetzenden Bildpunkt unmittelbar oder mittelbar benachbart ist. Auch kann das Geometrieähnlichkeitsmaß ergänzend die jeweilige Nähe des auszuwählenden Bildpunktes zu weiteren Bildpunkten repräsentieren, welche vorab zum Ersetzen weiterer dem zu ersetzenden Bildpunkt benachbarter Bildpunkte verwendet wurden. Das Geometrieähnlichkeitsmaß ist ausschließlich abhängig von der geometrischen Anordnung der Bildpunkte. Visuelle Eigenschaften der Bildpunkte, wie beispielsweise Farbe und Textur, beeinflussen das Geometrieähnlichkeitsmaß nicht. Das Geometrieähnlichkeitsmaß ist hoch, wenn der auszuwählende Bildpunkt sich in einer gleichen oder ähnlichen geometrischen Anordnung gegenüber dem einen oder den mehreren benachbarten Bildpunkten befindet, welche bereits zuvor zum Ersetzen von Bildpunkten in der Nachbarschaft des zu ersetzenden Bildpunktes ausgewählt wurden, wie der zu ersetzende Bildpunkt gegenüber diesen benachbarten ersetzten Bildpunkten. Das Ähnlichkeitsmaß sowie auch das einzelne Erscheinungsähnlichkeitsmaß und das Geometrieähnlichkeitsmaß können erfindungsgemäß auch im Sinne einer Kostenfunktion aufgefasst und verwendet werden, die dann minimal sind, wenn die Ähnlichkeiten hoch sind. In einem weiteren Schritt des erfindungsgemäßen Verfahrens erfolgt ein Ersetzen der Bildpunkte innerhalb der Maske, indem die Eigenschaften der ausgewählten Bildpunkte jeweils auf die jeweiligen zu ersetzenden Bildpunkte kopiert werden, woraufhin die ersetzten Bildpunkte den ausgewählten Bildpunkten jeweils visuell gleichen.

Ein besonderer Vorteil des erfindungsgemäßen Verfahrens besteht darin, dass es durch das Kopieren von einzelnen Bildpunkten aufwandsarm durchgeführt werden kann, da keine Bildpunktbereiche gegeneinander anzupassen sind. Dies ist möglich, da durch das Geometrieähnlichkeitsmaß die räumlichen Zusammenhänge der Bildpunkte Berücksichtigung finden. Im Gegensatz zum Stand der Technik wird erfindungsgemäß neben der visuellen Ähnlichkeit der zum Ersetzen verwendeten Punkte auch die Ähnlichkeit der geometrischen Anordnung berücksichtigt.

Bei bevorzugten Ausführungsformen des erfindungsgemäßen Verfahrens erfolgt das Auswählen von Bildpunkten außerhalb der Maske im bereitgestellten Bild. Bei besonderen Ausführungsformen erfolgt das Auswählen von Bildpunkten außerhalb der Maske alternativ oder ergänzend in Vergleichsbildern, welche beispielsweise zusätzlich bereitgestellt werden oder durch zeitlich vorangegangene oder zeitlich nachfolgende Bilder einer Bewegtbildfolge gebildet sind.

Bei bevorzugten Ausführungsformen des erfindungsgemäßen Verfahrens erfolgen das Auswählen von Bildpunkten und das Ersetzen der Bildpunkte iterativ. Hierfür wird für das Bild zunächst eine Auflösungspyramide berechnet, welche mehrere Auflösungsebenen beginnend mit einer gröbsten Auflösungsebene bis zu einer feinsten Auflösungsebene umfasst. Die Schritte des Auswählens von Bildpunkten und des Ersetzens der Bildpunkte wird für jede der Auflösungsebenen beginnend mit der gröbsten Auflösungsebene bis zur feinsten Auflösungsebene durchgeführt. Dieses Durchlaufen der Auflösungsebenen kann dazu genutzt werden, die Auswahl iterativ zu verbessern, wobei diese Verbesserung auf ausgewählte Bereiche innerhalb der Maske beschränkt werden kann, um den Aufwand hierfür zu begrenzen. Die zur Bestimmung des Erscheinungsähnlichkeitsmaßes und des Geometrieähnlichkeitsmaßes zu verwendenden vorab ausgewählten Bildpunkte sind für die Auflösungsebenen nach der gröbsten Auflösungsebene durch diejenigen Bildpunkte gebildet, welche in der nächst gröberen Auflösungsebene an der Position des zu ersetzenden Bildpunktes bereits ersetzt wurden. Das iterative Durchführen des erfindungsgemäßen Verfahrens unter Nutzung der Auflösungspyramide führt zu sehr guten visuellen Ergebnissen im Ersetzen des Bildinhaltes im Bereich des entfernten visuellen Objektes.

Grundsätzlich können alle Bildpunkte außerhalb der Maske zum Ersetzen der Bildpunkte innerhalb der Maske in Betracht kommen, wofür das Ähnlichkeitsmaß für alle Punkte außerhalb der Maske bestimmt werden kann. Bevorzugt wird das Ähnlichkeitsmaß nur für einen Teil der Bildpunkte außerhalb der Maske bestimmt, sodass die Menge der zum Ersetzen in Betracht kommenden Bildpunkte beschränkt ist. Demnach wird für das Auswählen der zum Ersetzen verwendeten Bildpunkte das Ähnlichkeitsmaß für die innerhalb mindestens eines Suchbereiches außerhalb der Maske befindlichen Bildpunkte bestimmt. Der Suchbereich ist bevorzugt durch einen Bereich um denjenigen der Bildpunkte außerhalb der Maske gebildet, welcher zum Ersetzen des vorab ersetzten Bildpunktes ausgewählt wurde. Der vorab ersetzte Bildpunkt kann beispielsweise derjenige Bildpunkt sein, der in der nächst gröberen Auflösungsebene an der Position des zu ersetzenden Bildpunktes ersetzt wurde. Bevorzugt werden weitere der Suchbereiche zufällig ausgewählt, um die Suche nicht zu sehr zu beschränken.

Das Ähnlichkeitsmaß umfasst bevorzugt weiterhin ein Formenähnlichkeitsmaß, welches die Ähnlichkeit des auszuwählenden Bildpunktes zu einer im Bild an die Maske angrenzenden Form repräsentiert. Somit beschreibt das Formähnlichkeitsmaß, inwieweit der auszuwählende Bildpunkt geeignet ist, eine im Bild vorhandene Form im Bereich des zu entfernenden Objektes fortzusetzen. Hierdurch soll sicher gestellt werden, dass Formen, welche sich hinter dem zu entfernenden Objekt befinden, durch das Ersetzen der Bildpunkte fortgeführt werden.

Die für das Formenähnlichkeitsmaß zu berücksichtigende Form kann beispielsweise durch eine gerade oder bogenförmige Kante gebildet sein. Die Form kann aber auch durch eine regelmäßig angeordnete, sich wiederholende gerade oder bogenförmige Kante gebildet sein. Das Formenähnlichkeitsmaß ist dann maximal, wenn der zu ersetzende Bildpunkt innerhalb der Maske durch ein Ersetzen mit dem auszuwählenden Bildpunkt eine Fortsetzung der außerhalb der Maske verlaufenden Kante bildet. Wie auch die anderen genannten Ähnlichkeitsmaße kann auch das Formenähnlichkeitsmaß als Kostenfunktion aufgefasst und verwendet werden, welche minimal ist, wenn die vorhandene Form ideal fortgesetzt wird.

Die Maske ist bevorzugt binär, sodass ein Bildpunkt entweder dem zu entfernenden Objekt oder dem Hintergrund zugeordnet wird. Folglich ist der Wert für die Transparenz entweder Null oder Eins. Bei besonderen Ausführungsformen des erfindungsgemäßen Verfahrens können die Bildpunkte jeweils auch gewichtet dem zu entfernenden Objekt und dem Hintergrund zugeordnet werden. Derartige Masken werden auch als grauskaliert bezeichnet.

Das Erscheinungsähnlichkeitsmaß basiert bevorzugt auf Unterschieden der Farbwerte, der Luminanzwerte, der Texturierungswerte und/oder der Gradienten dieser Werte des vorab ausgewählten Bildpunktes und des auszuwählenden Bildpunktes. Die für das Erscheinungsähnlichkeitsmaß zu ermittelnden Unterschiede sind bevorzugt durch Differenzen und/oder Abstandsmaße der betreffenden Werte gebildet.

Das Geometrieähnlichkeitsmaß ist bevorzugt dann maximal, wenn sich der auszuwählende Bildpunkt gegenüber dem zum Ersetzen des dem zu ersetzenden Bildpunkt benachbarten Bildpunktes verwendeten Bildpunkt in gleicher Weise angeordnet ist wie der zu ersetzende Bildpunkt gegenüber dem dem zu ersetzenden Bildpunkt benachbarten Bildpunkt.

Das Ähnlichkeitsmaß ist bevorzugt durch eine gewichtete Summe aus dem Erscheinungsähnlichkeitsmaß und dem Geometrieähnlichkeitsmaß und ggf. dem Formenähnlichkeitsmaß gebildet. Die Wichtung der einzelnen Ähnlichkeitsmaße kann verändert werden, um eine Anpassung an bestimmte Bildinhalte und bestimmte zu entfernende visuelle Objekte vornehmen zu können.

Bei bevorzugten Ausführungsformen des erfindungsgemäßen Verfahrens wird beim Bestimmen des Ähnlichkeitsmaßes zum Entscheiden über die Auswahl eines der auszuwählenden Bildpunkte das Ähnlichkeitsmaß nicht lediglich in Bezug auf den auszuwählenden Bildpunkt bestimmt, sondern es werden auch Bildpunkte berücksichtigt, die dem auszuwählenden Bildpunkt unmittelbar oder mittelbar benachbart sind. Hierfür ist das zum Auswählen eines der auszuwählenden Bildpunkte verwendete Ähnlichkeitsmaß durch eine Summe von Ähnlichkeitsmaßen gebildet, welche neben dem Ähnlichkeitsmaß bezogen auf den auszuwählenden Bildpunkt auch die Ähnlichkeitsmaße bezogen auf mehrere der zum auszuwählenden Bildpunkt unmittelbar oder mittelbar benachbarten Bildpunkte umfasst. Dies gilt individuell für das Erscheinungsähnlichkeitsmaß, das Geometrieähnlichkeitsmaß und ggf. das Formenähnlichkeitsmaß. Bevorzugt umfasst das zum Auswählen eines der auszuwählenden Bildpunkte verwendete Ähnlichkeitsmaß auch die Ähnlichkeitsmaße bezogen auf die in einem Bewertungsumfeld um den auszuwählenden Bildpunkt herum angeordneten Bildpunkte. Dies gilt individuell für das Erscheinungsähnlichkeitsmaß, das Geometrieähnlichkeitsmaß und ggf. das Formenähnlichkeitsmaß.

Das Bewertungsumfeld ist bevorzugt durch eine quadratische Matrix an Bildpunkten gebildet, die eine Länge zwischen 2 und 10 Bildpunkten, besonders bevorzugt eine Länge zwischen 4 und 6 Bildpunkten aufweist.

Bei den genannten bevorzugten Ausführungsformen ist eine Summe an Erscheinungsähnlichkeitsmaßen zu bestimmen. Ein einzelnes dieser Erscheinungsähnlichkeitsmaße bezogen auf einen zum auszuwählenden Bildpunkt benachbarten Bildpunkt wird bevorzugt gegenüber einem vorab ausgewählten Bildpunkt zum Ersetzen eines zum zu ersetzenden Bildpunkt in gleicher Weise benachbarten Bildpunktes bestimmt. Entsprechend repräsentiert ein einzelnes der Geometrieähnlichkeitsmaße bezogen auf einen zum auszuwählenden Bildpunkt benachbarten Bildpunkt die örtliche bzw. räumliche Nähe des zum auszuwählenden Bildpunkt benachbarten Bildpunktes zu demjenigen der Bildpunkte außerhalb der Maske, welcher vorab zum Ersetzen des dem zu ersetzenden Bildpunkt in gleicher Weise benachbarten Bildpunktes verwendet wurde.

Die Summen der einzelnen Ähnlichkeitsmaße sind bevorzugt jeweils durch eine mit Wichtungsfaktoren gewichtete Summe der jeweiligen Ähnlichkeitsmaße gebildet. So ist die Summe der Erscheinungsähnlichkeitsmaße bevorzugt durch eine mit Wichtungsfaktoren gewichtete Summe der Erscheinungsähnlichkeitsmaße gebildet. Entsprechend ist die Summe der Geometrieähnlichkeitsmaße bevorzugt durch eine mit Wichtungsfaktoren gewichtete Summe der Geometrieähnlichkeitsmaße gebildet. Weiterhin ist entsprechend die Summe der Formenähnlichkeitsmaße bevorzugt durch eine mit Wichtungsfaktoren gewichtete Summe der Formenähnlichkeitsmaße gebildet. Die genannten Wichtungsfaktoren können an dem jeweiligen Inhalt des Bildes oder auch an das jeweilig zu entfernende visuelle Objekt angepasst werden.

Die Wichtungsfaktoren sind bevorzugt jeweils von einem Abstand des zum auszuwählenden Bildpunkt unmittelbar oder mittelbar benachbarten Bildpunktes zum auszuwählenden Bildpunkt abhängig. Ergänzend oder alternativ sind die Wichtungsfaktoren jeweils bevorzugt von einer Richtung des zum auszuwählenden Bildpunkt unmittelbar oder mittelbar benachbarten Bildpunktes gegenüber dem auszuwählenden Bildpunkt abhängig. Ergänzend oder alternativ sind die Wichtungsfaktoren bevorzugt jeweils von einem Abstand des auszuwählenden Bildpunktes von einer Mitte des Bildes abhängig.

Das Auswählen des zu entfernenden visuellen Objektes im bereitgestellten Bild erfolgt bevorzugt dadurch, dass ein Nutzer das zu entfernende visuelle Objekt auf einer interaktiven Anzeige markiert. Die interaktive Anzeige kann beispielsweise durch eine berührungsempfindliche Anzeige, aber auch durch einen Computermonitor mit zugeordneter Maus gebildet sein. Das Markieren des zu entfernenden visuellen Objektes auf der interaktiven Anzeige erfolgt bevorzugt dadurch, dass der Nutzer das zu entfernende visuelle Objekt symbolisch einkreist. Das Einkreisen erfolgt nicht unbedingt durch einen geometrischen Kreis, sondern kann beispielsweise an die äußere Form des visuellen Objektes angepasst sein. Die Einkreisung repräsentiert bereits eine Vorstufe der Maske. Aus dieser Vorstufe wird anschließend die Maske bestimmt, wofür die Vorstufe insbesondere um Bildbereiche am Rand reduziert und/oder erweitert wird.

Bei bevorzugten Ausführungsformen des erfindungsgemäßen Verfahrens wird die visuelle Ähnlichkeit der Bildpunkte innerhalb der Einkreisung ermittelt, um die Maske zu bestimmen.

Bei besonders bevorzugten Ausführungsformen des erfindungsgemäßen Verfahrens ist dieses weiterhin dazu ausgebildet, das zu entfernende visuelle Objekt aus einem Videodatenstrom zu entfernen. Bei diesen Ausführungsformen erfolgt zunächst ein Empfangen eines übertragenen Videodatenstromes, beispielsweise eines live ausgestrahlten Videodatenstromes. Der Videodatenstrom umfasst ein aktuelles Bild und nachfolgende Bilder. Jedes der Bilder weist Bildpunkte in mindestens zwei Dimensionen auf. Mit dem empfangenen aktuellen Bild ist ein erstes Bild bereitgestellt. Zunächst werden die erfindungsgemäßen Schritte des Auswählens des zu entfernenden visuellen Objektes, des Bestimmens einer Maske, des Auswählens von Bildpunkten und des Ersetzens der Bildpunkte für das aktuelle Bild durchgeführt. Anschließend ist ein nachfolgendes Bild des übertragenen Videodatenstromes zu empfangen, welches ein weiteres bereitgestelltes Bild darstellt. Daraufhin sind die erfindungsgemäßen Schritte des Bestimmens einer Maske, des Auswählens von Bildpunkten und des Ersetzens der Bildpunkte für das empfangene weitere Bild zu wiederholen, wobei die im vorangegangenen Bild ersetzten Bildpunkte als die vorab ausgewählten Bildpunkte dienen. Die im vorangegangenen Bild ersetzten Bildpunkte können beispielsweise in der gröbsten Auflösungsebene der ggf. verwendeten Auflösungspyramide als die vorab ausgewählten Bildpunkte verwendet werden. Bei den im vorangegangenen Bild ersetzten Bildpunkten kann es sich um diejenigen der ersetzten Bildpunkte handeln, welche im vorangegangenen Bild an denselben Positionen zum Ersetzen verwendet wurden wie die im empfangenen weiteren Bild zu ersetzenden Bildpunkte. Es kann sich jedoch auch um diejenigen der ersetzten Bildpunkte handeln, welche im vorangegangenen Bild an anderen Positionen als die der im empfangenen weiteren Bild zu ersetzenden Bildpunkte zum Ersetzen verwendet wurden; beispielsweise dann, wenn diese an anderen Positionen zum Ersetzen verwendeten Bildpunkte als besser geeignet zum Ersetzen der jeweiligen Bildpunkte im empfangenen weiteren Bild eingeschätzt werden.

Bei Ausführungsformen des erfindungsgemäßen Verfahrens, bei denen das zu entfernende visuelle Objekt aus einem Videodatenstrom entfernt wird, umfasst das Ähnlichkeitsmaß bevorzugt weiterhin ein Kontinuitätsähnlichkeitsmaß, welches die visuelle Ähnlichkeit zwischen dem auszuwählenden Bildpunkt und demjenigen Bildpunkt repräsentiert, welcher in einem zeitlich vorausgehenden oder nachfolgenden Bild zum Ersetzen eines an einer gleichen örtlichen Position wie der zu ersetzende Bildpunkt befindlichen Bildpunktes verwendet wurde. Das zeitlich vorausgehende oder nachfolgende Bild kann beispielsweise durch ein Schlüsselbild gebildet sein, welches vorab festgelegt wurde.

Das Kontinuitätsähnlichkeitsmaß wird ebenso wie die anderen einzelnen Ähnlichkeitsmaße bevorzugt auch für Bildpunkte bestimmt, welche dem auszuwählenden Bildpunkt unmittelbar oder mittelbar benachbart sind. Hierfür ist das Kontinuitätsähnlichkeitsmaß bevorzugt durch eine Summe an Kontinuitätsähnlichkeitsmaßen gebildet, welche neben dem Kontinuitätsähnlichkeitsmaß bezogen auf den auszuwählenden Bildpunkt auch die Kontinuitätsähnlichkeitsmaße bezogen auf mehrere der zum auszuwählenden Bildpunkt unmittelbar oder mittelbar benachbarten Bildpunkte umfasst. Dabei werden die einzelnen Kontinuitätsähnlichkeitsmaße wie auch die anderen einzelnen Ähnlichkeitsmaße bevorzugt gewichtet zu der Summe zusammengeführt.

Das Ähnlichkeitsmaß ist bevorzugt durch eine gewichtete Summe aus dem Erscheinungsähnlichkeitsmaß, dem Geometrieähnlichkeitsmaß und ggf. dem Formenähnlichkeitsmaß sowie dem Kontinuitätsähnlichkeitsmaß gebildet. Die Wichtung der einzelnen Ähnlichkeitsmaße kann verändert werden, um eine Anpassung an bestimmte Bildinhalte und bestimmte zu entfernende visuelle Objekte vornehmen zu können.

Bei Ausführungsformen des erfindungsgemäßen Verfahrens, bei welchen das zu entfernende visuelle Objekt aus einem Videodatenstrom entfernt wird, erfolgt das Bestimmen der Maske für eines der Bilder bevorzugt basierend auf der für das vorangegangene Bild bestimmte Maske. Hierdurch wird eine zeitliche Kontinuität der Maske gewährleistet.

Das erfindungsgemäße Verfahren wird bevorzugt in Realzeit ausgeführt, um beispielsweise ein visuelles Objekt in einem live ausgestrahlten Videodatenstrom zu entfernen und den Videodatenstrom mit den ersetzten Bildpunkten anzuzeigen. Beispielsweise kann das visuelle Objekt aus einem Videodatenstrom entfernt werden, welcher unmittelbar von einer Videokamera erzeugt wird.

Das erfindungsgemäße Verfahren wird bevorzugt als Rechnerprogramm ausgeführt.

Die erfindungsgemäße Bildverarbeitungsanlage ist zur Ausführung des erfindungsgemäßen Verfahrens ausgebildet. Bevorzugt ist die Bildverarbeitungsanlage für bevorzugte Ausführungsformen des erfindungsgemäßen Verfahrens ausgebildet.

Die erfindungsgemäße Bildverarbeitungsanlage kann durch unterschiedlichste Datenverarbeitungsanlagen gebildet sein, beispielsweise durch einen Computer, durch einen Tablet-Computer oder durch ein Smartphone.

Weitere Einzelheiten und Weiterbildungen der Erfindung ergeben sich aus der nachfolgenden Beschreibung einer bevorzugten Ausführungsform, unter Bezugnahme auf die Zeichnung. Es zeigen:

Fig. 1: eine Veranschaulichung eines Geometrieähnlichkeitsmaßes;

Fig. 2: eine Veranschaulichung eines Erscheinungsähnlichkeitsmaßes; und

Fig. 3: eine Veranschaulichung zur Bestimmung des Geometrieähnlichkeitsmaßes.

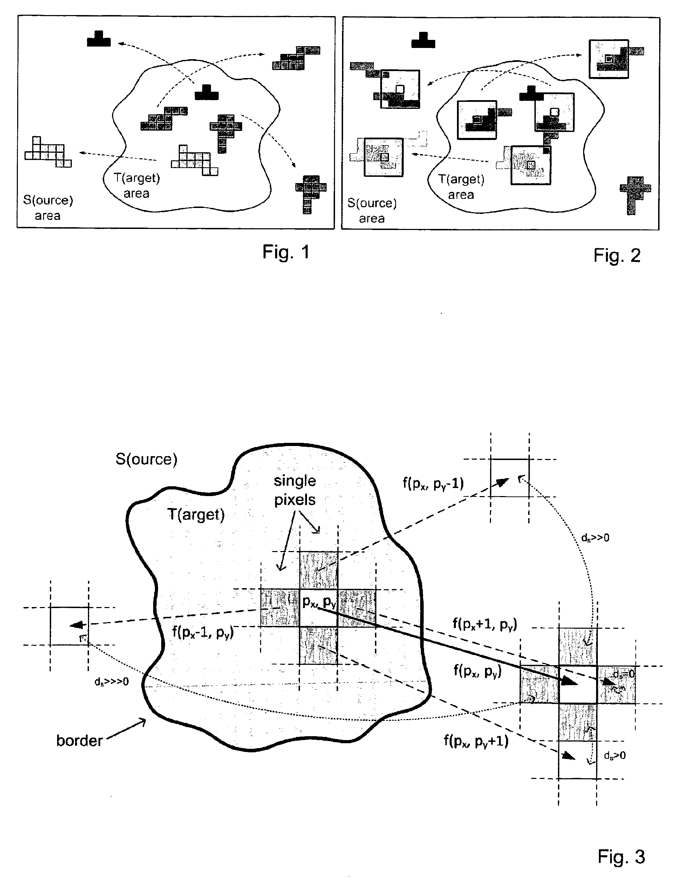

Fig. 1 und 2 veranschaulichen Ähnlichkeitsmaße zur Bestimmung der Eignung eines auszuwählenden Bildelementes zum Ersetzen eines Bildelementes, welches zum Entfernen eines visuellen Objektes aus einem Bild oder einem Bewegtbild entfernt wurde. Das Entfernen von visuellen Objekten stellt eine Kernaufgabe der so genannten "Diminished Reality" dar. Hierfür sind Transformationsfunktionen f zu finden, um Bildpunkte eines Zieles T (Target) den Bildpunkten in einer Quelle S (Source) zuzuordnen. Dabei soll die Ähnlichkeit in den Bildbereichen maximal sein, was auch dadurch ausgedrückt werden kann, dass die Kostenfunktion $\mathrm{cost}_\alpha$ minimal ist:

$$\min_f \sum_{p \in T} \mathrm{cost}_\alpha(p)$$

In dieser Gleichung steht $p = (p_x, p_y)^T$ für eine 2D-Position.

Erfindungsgemäß werden ein Geometrieähnlichkeitsmaß und ein Erscheinungsähnlichkeitsmaß bestimmt, welche entsprechend auch als Geometriekostenfunktion $\mathrm{cost}_{\mathrm{spatial}}(p)$ und Erscheinungskostenfunktion $\mathrm{cost}_{\mathrm{appearance}}(p)$ aufgefasst werden können. Beide Ähnlichkeitsmaße bzw. Kostenfunktionen werden additiv gewichtet zusammengeführt:

$$\mathrm{cost}_\alpha(p) = \alpha \cdot \mathrm{cost}_{\mathrm{spartial}}(p) + (1-\alpha) \cdot \mathrm{cost}_{\mathrm{appearance}}(p)$$

In dieser Gleichung stellt $\alpha$ einen Gewichtungsfaktor dar, wobei $0 < \alpha < 1$ gilt.

Wie aus Fig. 1 hervorgeht, wird bei der Geometriekostenfunktion die Anordnung der benachbarten Pixel $N_s$

berücksichtigt. Die Geometriekostenfunktion ergibt sich bevorzugt wie folgt:

$$\text{cost}_{\text{spatial}}(p) = \sum_{\vec{v} \in N_s} d_s\big[f(p) + \vec{v}, f(p + \vec{v})\big] \cdot w_s(\vec{v})$$

In dieser Gleichung steht $d_s$ für ein räumliches Distanzmaß. Der Faktor $w_s$ stellt einen Wichtungsfaktor, insbesondere für die Bildpunkte im Umfeld, dar.

Weiterhin ergibt sich eine alternativ bevorzugte Geometriekostenfunktion wie folgt:

$$\text{cost}_{\text{spatial}}(p) = \min_{\vec{v} \in N_s}\big(d_s\big[f(p) + \vec{v}, f(p + \vec{v})\big] \cdot w_s(\vec{v})\big)$$

Wie aus Fig. 2 deutlich wird, wird bei dem Erscheinungsähnlichkeitsmaß die visuelle Ähnlichkeit des auszuwählenden Bildpunkt zu einem vorab zum Ersetzen ausgewählten Bildpunkt bestimmt, wobei benachbarte Pixel $N_a$ berücksichtigt werden. Die entsprechende Erscheinungskostenfunktion wird bevorzugt wie folgt bestimmt:

$$\text{cost}_{\text{appearance}}(p) = \sum_{\vec{v} \in N_a} d_a\big[\text{I}(p + \vec{v}), \text{I}(f(p) + \vec{v})\big] \cdot w_{a1}(p + \vec{v}) \cdot w_{a2}(\vec{v}) \cdot w_{a3}(f(p) + \vec{v})$$

In dieser Gleichung steht $d_a$ für ein Abstandsmaß, welches auf die visuelle Erscheinung, beispielsweise auf die Farbe angewendet wird. Das Abstandsmaß kann beispielsweise durch die Summe der quadrierten Differenzen (SSD) oder durch die Summe der absoluten Differenzen (SAD) gebildet sein. Die Faktoren $w_{a1}$, $w_{a2}$ und $w_{a3}$ stellen Wichtungsfaktoren dar.

Das erfindungsgemäße Verfahren wird bevorzugt auf einen Videodatenstrom angewendet. Hierbei wird bevorzugt weiterhin ein Kontinuitätsähnlichkeitsmaß berücksichtigt, welches die Kohärenz des Videodatenstromes beschreibt. Das Kontinuitätsähnlichkeitsmaß wird als Kontinuitätskostenfunktion bzw. als Kohärenzkostenfunktion bevorzugt wie folgt bestimmt:

$$\text{cost}_{\text{coherence}}(p) = \sum_{\vec{v} \in N_a} d_a'\big[\text{I}(p + \vec{v}), R(p + \vec{v})\big] \cdot w_{a1}'(p + \vec{v}) \cdot w_{a2}'(\vec{v})$$

Gemäß dieser Gleichung werden ebenfalls die benachbarten Pixel $N_a$ berücksichtigt. In dieser Gleichung steht $d_a'$ für ein Abstandsmaß. Bei R(p) handelt es sich um den Bildpunkt eines Referenzmodells. Die Faktoren $w_{a1}'$, und $w_{a2}'$ stellen wiederum Wichtungsfaktoren dar.

Fig. 3 veranschaulicht die Bestimmung der Geometriekostenfunktion. Das Abstandsmaß $d_s$ ist dann Null, wenn der auszuwählende Bildpunkt in gleicher Weise zu den vorab ausgewählten Bildpunkten angeordnet ist wie dies im Zielbereich der Fall ist. Das Abstandsmaß $d_s$ ist geringfügig größer als Null, wenn die geometrische Anordnung zumindest ähnlich ist, beispielsweise wie für $f(p_x, p_{y+1})$. Das Abstandsmaß $d_s$ ist sehr viel größer als Null, wenn sich der auszuwählende Bildpunkt an einer weit entfernten Position im Bild befindet, wie zum Beispiel für $f(p_x, p_{y-1})$ oder $f(p_{x-1}, p_y)$.

**Patentansprüche**

1. Verfahren zum Entfernen eines visuellen Objektes aus einem Bild, folgende Schritte umfassend:

- Bereitstellen eines Bildes, welches Bildpunkte in mindestens zwei Dimensionen aufweist;
- Auswählen eines zu entfernenden visuellen Objektes im Bild;
- Bestimmen einer Maske für das ausgewählte visuelle Objekt;
- Auswählen von Bildpunkten außerhalb der Maske, welche zum Ersetzen von Bildpunkten innerhalb der Maske verwendet werden sollen; und
- Ersetzen der Bildpunkte innerhalb der Maske, indem die Eigenschaften der ausgewählten Bildpunkte auf die zu ersetzenden Bildpunkte kopiert werden;
**dadurch gekennzeichnet, dass** das Auswählen der Bildpunkte anhand eines Ähnlichkeitsmaß entschieden wird, welches ein Erscheinungsähnlichkeitsmaß umfasst, welches die visuelle Ähnlichkeit zwischen einem vorab ausgewählten Bildpunkt zum Ersetzen des zu ersetzenden Bildpunktes und dem auszuwählenden Bildpunkt repräsentiert, wobei das Ähnlichkeitsmaß weiterhin ein Geometrieähnlichkeitsmaß umfasst, welches die Nähe des auszuwählenden Bildpunktes zu demjenigen der Bildpunkte außerhalb der Maske repräsentiert, welcher vorab zum Ersetzen des dem zu ersetzenden Bildpunkt benachbarten Bildpunktes verwendet wurde.

2. Verfahren nach Anspruch 1, **dadurch gekennzeichnet, dass** das Auswählen von Bildpunkten außerhalb der Maske im bereitgestellten Bild erfolgt.

3. Verfahren nach Anspruch 1 oder 2, **dadurch gekennzeichnet, dass** für das Bild zunächst eine Auflösungspyramide berechnet wird, welche mehrere Auflösungsebenen beginnend mit einer gröbsten Auflösungsebene bis zu einer feinsten Auflösungsebene umfasst, wobei die Schritte des Auswählens von Bildpunkten und des Ersetzens der Bildpunkte für jede der Auflösungsebenen beginnend mit der gröbsten Auflösungsebene bis zur feinsten Auflösungsebene durchgeführt werden, und wobei als die vorab ausgewählten Bildpunkte in den Auflösungsebenen nach der gröbsten Auflösungsebene die in der nächst gröberen Auflösungsebene ersetzten Bildpunkte verwendet werden.

4. Verfahren nach einem der Ansprüche 1 bis 3, **dadurch gekennzeichnet, dass** für das Auswählen der zum Ersetzen verwendeten Bildpunkte das Ähnlichkeitsmaß für die innerhalb mindestens eines Suchbereiches außerhalb der Maske befindlichen Bildpunkte bestimmt wird.

5. Verfahren nach Anspruch 4, **dadurch gekennzeichnet, dass** der Suchbereich durch einen Bereich um denjenigen der Bildpunkte außerhalb der Maske gebildet ist, der zum Ersetzen des vorab ersetzten Bildpunktes ausgewählt wurde.

6. Verfahren nach einem der Ansprüche 1 bis 5, **dadurch gekennzeichnet, dass** das Ähnlichkeitsmaß weiterhin ein Formenähnlichkeitsmaß umfasst, welches die Ähnlichkeit des auszuwählenden Bildpunktes zu einer im Bild an die Maske angrenzenden Form repräsentiert.

7. Verfahren nach einem der Ansprüche 1 bis 6, **dadurch gekennzeichnet, dass** das Ähnlichkeitsmaß eine gewichtete Summe aus dem Erscheinungsähnlichkeitsmaß und dem Geometrieähnlichkeitsmaß oder eine gewichtete Summe aus dem Erscheinungsähnlichkeitsmaß, dem Geometrieähnlichkeitsmaß und dem Formenähnlichkeitsmaß ist.

8. Verfahren nach einem der Ansprüche 1 bis 7, **dadurch gekennzeichnet, dass** das zum Auswählen eines der auswählenden Bildpunkte verwendete Ähnlichkeitsmaß durch eine Summe der Ähnlichkeitsmaße gebildet ist, welche neben dem Ähnlichkeitsmaß bezogen auf den auszuwählenden Bildpunkt auch die Ähnlichkeitsmaße bezogen auf mehrere der zum auszuwählenden Bildpunkt benachbarten Bildpunkte umfasst.

9. Verfahren nach einem der Ansprüche 1 bis 8, **dadurch gekennzeichnet, dass** das Auswählen des zu entfernenden visuellen Objektes im bereitgestellten Bild dadurch erfolgt, dass ein Nutzer das zu entfernende visuelle Objekt auf einer interaktiven Anzeige markiert.

10. Verfahren nach einem der Ansprüche 1 bis 9, **dadurch gekennzeichnet, dass** es weiterhin dazu ausgebildet ist, dass zu entfernende visuelle Objekt aus einem Videodatenstrom zu entfernen, wobei das Verfahren folgende weitere Schritte umfasst:

- Empfangen eines übertragenen Videodatenstromes, welcher ein aktuelles Bild und nachfolgende Bilder umfasst, wobei jedes der Bilder Bildpunkte in mindestens zwei Dimensionen aufweist;
- Durchführen der Schritte des Auswählen des zu entfernenden visuellen Objektes, des Bestimmens einer Maske, des Auswählens von Bildpunkten und des Ersetzens der Bildpunkte für das aktuelle Bild;
- Empfangen eines nachfolgendes Bildes des übertragenen Videodatenstromes; und
- Wiederholen der Schritte des Bestimmens einer Maske, des Auswählens von Bildpunkten und des Ersetzens der Bildpunkte für das empfangene weitere Bild, wobei die im vorangegangen Bild ersetzten Bildpunkte als die vorab ausgewählten Bildpunkte verwendet werden.

11. Verfahren nach Anspruch 10, **dadurch gekennzeichnet, dass** das Ähnlichkeitsmaß weiterhin ein Kontinuitätsähnlichkeitsmaß umfasst, welches die visuelle Ähnlichkeit zwischen dem auszuwählenden Bildpunkt und demjenigen Bildpunkt repräsentiert, der in einem zeitlich vorausgehenden oder nachfolgenden Bild zum Ersetzen eines an einer gleichen Position wie der zu ersetzende Bildpunkt befindlichen Bildpunktes verwendet wurde.

**12.** Verfahren nach Anspruch 10 oder 11, **dadurch gekennzeichnet, dass** das Bestimmen der Maske für eines der Bilder basierend auf der für das vorangegangene Bild bestimmten Maske erfolgt.

**13.** Verfahren nach einem der Ansprüche 10 bis 12, **dadurch gekennzeichnet, dass** es in Realzeit ausgeführt wird.

**14.** Bildverarbeitungsanlage, die zur Ausführung des Verfahrens nach einem der Ansprüche 1 bis 13 ausgebildet ist.

**15.** Bildverarbeitungsanlage nach Anspruch 14, **dadurch gekennzeichnet, dass** sie durch einen Computer, durch einen Tablet-Computer oder durch ein Smartphone gebildet ist.

**Claims**

**1.** Method for removal of a visual object from an image, comprising the following steps:

- providing an image having pixels in at least two dimensions;
- selecting a visual object to be removed in the image;
- determining a mask for the selected visual object;
- selecting of pixels outside the mask which are to be used for the replacement of pixels inside the mask; and
- replacing of the pixels inside the mask by copying the properties of the selected pixels onto the pixels being replaced;

**characterized in that** the selection of the pixels is decided by means of a similarity measure, which comprises an appearance similarity measure, representing the visual similarity between a previously selected pixel for replacement of the pixel to be replaced and the pixel to be selected, wherein the similarity measure furthermore comprises a geometry similarity measure, representing the proximity of the pixel to be selected to that one of the pixels outside the mask that was used previously for replacement of the pixel neighboring the pixel to be replaced.

**2.** Method according to claim 1, **characterized in that** the selection of pixels outside the mask is done in the image provided.

**3.** Method according to claim 1 or 2, **characterized in that** at first a resolution pyramid is calculated for the image, which comprises several resolution levels starting with the coarsest resolution level and ranging up to a finest resolution level, wherein the steps of the selection of pixels and replacement of pixels are carried out for each of the resolution levels starting with the coarsest resolution level and proceeding up to the finest resolution level, and wherein the pixels replaced in the next coarser resolution level are used as the previously selected pixels in the resolution levels after the coarsest resolution level.

**4.** Method according to one of claims 1 to 3, **characterized in that** the similarity measure for the pixels located within at least one search region outside the mask is determined for the selection of the pixels used for the replacement.

**5.** Method according to claim 4, **characterized in that** the search region is formed by a region about that one of the pixels outside the mask that was selected for the replacement of the previously selected pixel.

**6.** Method according to one of claims 1 to 5, **characterized in that** the similarity measure furthermore comprises a shape similarity measure, representing the similarity of the pixel being selected to a shape bordering on the mask in the image.

**7.** Method according to one of claims 1 to 6, **characterized in that** the similarity measure is a weighted sum of the appearance similarity measure and the geometry similarity measure or a weighted sum of the appearance similarity measure, the geometry similarity measure and the shape similarity measure.

**8.** Method according to one of claims 1 to 7, **characterized in that** the similarity measure used for the selection of one of the pixels being selected is formed by a sum of the similarity measures comprising, besides the similarity measure with respect to the pixel being selected, also the similarity measures with respect to several of the pixels neighboring the pixel being selected.

**9.** Method according to one of claims 1 to 8, **characterized in that** the selection of the visual object to be removed in the image provided is done **in that** a user marks the visual object to be removed on an interactive display.

10. Method according to one of claims 1 to 9, **characterized in that** it is furthermore designed to remove the visual object being removed from a video data stream, wherein the method comprises the following additional steps:

- receiving a transmitted video data stream, which comprises a current image and following images, each of the images having pixels in at least two dimensions;
- performing the steps of the selection of the visual object to be removed, the determination of a mask, the selection of pixels and the replacement of the pixels for the current image;
- receiving a following image of the transmitted video data stream; and
- repeating the steps for the determination of a mask, the selection of pixels and the replacement of the pixels for the additional image received, wherein the pixels replaced in the previous image are used as the previously selected pixels.

11. Method according to claim 10, **characterized in that** the similarity measure further comprises a continuity similarity measure, which represents the visual similarity between the pixel being selected and the pixel which was used for the replacement of a pixel located in an identical spatial position as the pixel being replaced in an earlier or later image.

12. Method according to claim 10 or 11, **characterized in that** the determination of the mask for one of the images is done based on the mask determined for the preceding image.

13. Method according to one of claims 10 to 12, **characterized in that** it is carried out in real time.

14. Image processing system designed to carry out the method according to one of claims 1 to 13.

15. Image processing system according to claim 14, **characterized in that** it is formed by a computer, by a tablet computer or by a smartphone.


**Revendications**

1. Procédé de suppression d'un objet visuel d'une image, comprenant les étapes suivante :

- mise à disposition d'une image qui présente des points d'image dans au moins deux dimensions ;
- sélection d'un objet visuel à supprimer dans l'image ;
- définition d'un masque pour l'objet visuel sélectionné ;
- sélection en dehors du masque de points d'image, qui doivent être utilisés pour remplacer des points d'image à l'intérieur du masque ; et
- remplacement des points d'image à l'intérieur du masque en copiant les propriétés des points d'image sélectionnées sur les points d'image à remplacer;
**caractérisé en ce que** la sélection des points d'image est décidée en partant d'un indice de similarité qui comprend un indice de similarité d'apparence qui représente la similarité visuelle entre un point d'image précédemment sélectionné et destiné à remplacer le point d'image à remplacer et le point d'image à sélectionner, l'indice de similarité comprenant en outre un indice de similarité géométrique qui représente la proximité du point d'image à sélectionner avec celui parmi les points d'image situés en dehors du masque qui a préalablement été utilisé pour remplacer le point d'image voisin du point d'image à remplacer.

2. Procédé selon la revendication 1, **caractérisé en ce que** la sélection de points d'image a lieu en dehors du masque dans l'image mise à disposition.

3. Procédé selon la revendication 1 ou 2, **caractérisé en ce qu'**on calcule d'abord pour l'image une pyramide de définition qui comprend plusieurs plans de définition en commençant par un plan de définition le plus grossier jusqu'à un plan de définition le plus fin, les étapes de sélection de points d'image et de remplacement des points d'image pour chacun des plans de définition étant réalisées en commençant par le plan de définition le plus grossier jusqu'au plan de définition le plus fin et dans lequel on utilise comme points d'image préalablement sélectionnés dans les plans de définition, après le plan d'image le plus grossier, les points d'image remplacés dans le plan de définition le plus grossier suivant.

**4.** Procédé selon une des revendications 1 à 3, **caractérisé en ce qu'**on définit, pour la sélection des points d'image utilisés en remplacement, l'indice de similarité pour les points d'image se trouvant à l'intérieur d'au moins une plage de recherche en dehors du masque.

**5.** Procédé selon la revendication 4, **caractérisé en ce que** la plage de recherche est constituée par une plage autour de celui des points d'image en dehors du masque qui a été sélectionné pour remplacer le point d'image préalablement remplacé.

**6.** Procédé selon une des revendications 1 à 5, **caractérisé en ce que** l'indice de similarité comprend en outre un indice de similarité de forme qui représente la similarité du point d'image à sélectionner avec une forme adjacente au masque dans l'image.

**7.** Procédé selon une des revendications 1 à 6, **caractérisé en ce que** l'indice de similarité est une somme pondérée de l'indice de similarité d'apparence et de l'indice de similarité géométrique ou une somme pondérée de l'indice de similarité d'apparence, de l'indice de similarité géométrique et de l'indice de similarité de forme.

**8.** Procédé selon une des revendications 1 à 7, **caractérisé en ce que** l'indice de similarité utilisé pour sélectionner un des points d'image à sélectionner est constitué par une somme des indices de similarité qui, outre l'indice de similarité par rapport au point d'image à sélectionner, comprend aussi des indices de similarité par rapport à plusieurs des points d'image voisins du point d'images à sélectionne.

**9.** Procédé selon une des revendications 1 à 8, **caractérisé en ce que** la sélection de l'objet visuel à supprimer dans l'image mise à disposition a lieu par le fait qu'un utilisateur marque l'objet visuel sélectionné sur un afficheur interactif.

**10.** Procédé selon une des revendications 1 à 9, **caractérisé en ce qu'**il est en outre conçu pour supprimer l'objet visuel à supprimer dans un flux de données vidéo, le procédé comprenant les autres étapes suivantes :

- réception d'un flux de données vidéo transmis qui comprend une image actuelle et des images suivantes, chacune des images présentant des points d'image dans au moins deux dimensions ;
- réalisation des étapes de sélection de l'objet visuel à supprimer, de définition d'un masque, de sélection de points d'image et de remplacement des points d'image pour l'image actuelle ;
- réception d'une image suivante du flux de données vidéo transmis ; et
- répétition des étapes de définition d'un masque, de sélection de points d'images et de remplacement des points d'image pour l'autre image reçue, les points d'image précédents remplacés étant utilisés en tant que points d'image préalablement sélectionnée.

**11.** Procédé selon la revendication 10, **caractérisé en ce que** l'indice de similarité comprend en outre un indice de similarité de continuité qui représente la similarité visuelle entre le point d'image à sélectionner et celui des points d'image qui a été utilisé dans une image chronologiquement précédente ou suivante pour remplacer un point d'image se trouvant à la même position que le point d'images à remplacer.

**12.** Procédé selon la revendication 10 ou 11, **caractérisé en ce que** la définition du masque pour une des images a lieu en se basant sur le masque défini pour l'image précédente.

**13.** Procédé selon une des revendications 10 à 12, **caractérisé en ce qu'**il est réalisé en temps réel.

**14.** Dispositif de traitement d'images qui est conçu pour réaliser le procédé selon une des revendications 1 à 13.

**15.** Dispositif de traitement d'images selon la revendication 14, **caractérisé en ce qu'**il est constitué par un ordinateur, par une tablette informatique ou par un Smartphone.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006285762 A1
- EP 2317470 A1
- US 2005146539 A1

**In der Beschreibung aufgeführte Nicht-Patentliteratur**

- **VON J. HERLING ; W. BROLL.** Advanced self-contained object removal for realizing real-time diminished reality in unconstrained environments. *Mixed and Augmented Reality (ISMAR), 2010 9th IEEE International Symposium,* Oktober 2010, 207-212
- **VON L. DEMANET ; B. SONG ; T. CHAN.** Image inpainting by correspondence maps: a deterministic approach. *Computer,* 2003, vol. 1100 (03-40), 21750
- **VON A. CRIMINISI ; P. PEREZ ; K. TOYAMA.** Region filling and object removal by exemplar-based image inpainting. *Image Processing, IEEE Transactions,* September 2004, vol. 13 (9), 1200-1212
- **VON LEVIN, A. et al.** Learning How to Inpaint from Global Image Statistics. *Proceedings of the 8th IEEE International Conference on Computer Vision (ICCV), Nice, Frankreich,* 13. Oktober 2003, vol. 1, ISBN 987-0-7695-1950-0, 305-312